(19) Europäisches Patentamt

European Patent Office

Office européen des brevets

(11) Veröffentlichungsnummer: **0 315 012 B1**

(12) **EUROPÄISCHE PATENTSCHRIFT**

(45) Veröffentlichungstag der Patentschrift: **26.02.92**

(21) Anmeldenummer: **88117684.6**

(22) Anmeldetag: **24.10.88**

(51) Int. Cl.⁵: **B29C 47/32**, B29C 47/20

(54) **Verfahren zum Herstellen eines innen glatten, aussen gerippten Rohres aus extrudierbarem Kunststoff sowie Vorrichtung zur Durchführung des Verfahrens.**

(30) Priorität: **05.11.87 DE 3737588**

(43) Veröffentlichungstag der Anmeldung:
**10.05.89 Patentblatt 89/19**

(45) Bekanntmachung des Hinweises auf die
Patenterteilung:
**26.02.92 Patentblatt 92/09**

(84) Benannte Vertragsstaaten:
**AT CH DE ES FR GB IT LI NL SE**

(56) Entgegenhaltungen:
**EP-A- 0 005 104      DE-A- 2 362 444
FI-A- 70 822      FR-A- 2 205 398
US-A- 3 635 631      US-A- 3 891 007
US-A- 4 174 200**

(73) Patentinhaber: **UNICOR GmbH Rahn Plastmaschinen
Industriestrasse 56
W-8728 Hassfurt(DE)**

(72) Erfinder: **Rahn, Horst
Distelfeld 8
W-8728 Hassfurt(DE)**

(74) Vertreter: **LOUIS, PÖHLAU, LOHRENTZ & SE-
GETH
Kesslerplatz 1 Postfach 3055
W-8500 Nürnberg-1(DE)**

# Beschreibung

Die Erfindung betrifft ein Verfahren zum Herstellen eines innen glatten, außen in Umfangsrichtung verlaufende Rippen aufweisenden Rohres aus extrudierbarem Kunststoff, wobei Kunststoffschmelze im Inneren eines die gewünschte Außenform des Rohres aufweisenden wandernden Formkanals aus einer feststehenden Düse extrudiert, gegen die Innenwand des Formkanals gedrückt und mittels eines im Formkanal vorgesehenen Kolbens eine glatte Rohrinnenwand geformt wird, und wobei die die Rippen des Rohres bildenden Vertiefungen des Formkanals in wenigstens einem bestimmten Teil des Umfangs verzögert mit der Schmelze gefüllt werden. Der extrudierbare Werkstoff wird in der Regel ein Thermoplast sein, wie insbes. PVC oder PE. Er kann bspw. auch vernetzbares PE sein.

Verfahren der oben umrissenen Art sind vielfach bekannt. So beschreibt bspw. die DE-PS 24 50 171 ein Verfahren, bei welchem der Extrusionskanal im Inneren des wandernden Formkanals axial gerichtet mündet. In erheblichem Abstand von dieser Mündung trägt der Düsenkern den Kolben, wobei die extruderseitige Stirnwand des Kolbens als schwach ansteigender Kegel ausgebildet ist. Die Schmelze strömt dann gegen diesen Kegel, wird auf ihm nach außen gedrängt und soll sich in die die Rippen bildenden Vertiefungen in der Innenwand der wandernden Hohlform eindrücken. Da der Extrusionsdruck nicht nach außen gerichtet ist (die Schmelze strömt zwischen Düse und Kegel frei), wird die in die Rippenhohlräume eindrückende Kraft lediglich durch die Mitnahmewirkung der wandernden Form auf die zwischen die wandernde Form und den Kolben eingepreßte zähelastische Schmelze erreicht. Das führt nicht nur zu einem relativ hohen Druck auf einer langen Strecke. Ein weiterer Nachteil liegt darin, daß die Schmelze dazu neigt, längs Zylinderlinien im Inneren des Rohres Abscherflächen zu bilden. Der Hauptnachteil dieses Verfahrens liegt jedoch darin, daß es außerordentlich schwierig ist, eine einwandfreie Ausbildung der Rippen zu erreichen. Dazu bedarf es einer außerordentlich genauen Abstimmung von Extrusionsgeschwindigkeit, Abziehgeschwindigkeit und Extrusionstemperatur. Auch muß die Schmelze einer Vielzahl von Parametern genügen.

Gemäß einem anderen bekannten Verfahren (DE-PS 27 09 395) tritt ein Schmelzschlauch freischwebend aus der Extrusionsdüse aus und wird auf einen im Abstand von der Düse von einer Verlängerung des Düsenkerns gehaltenen Kolben aufgezogen. Dort kommt der Schlauch, der über der ebenfalls konischen extruderseitigen Stirnwand des Kernes aufgeweitet wird, in den "Griffbereich" der wandernden Hohlform, wird von dieser erfaßt und ebenfalls unter dem Einfluß der Mitnahmekraft wird die verformbare Schmelze mehr oder weniger in die Außenrollen des Formkanals eingepreßt. Hier treten im wesentlichen die gleichen Probleme auf, wie bei dem zuerst beschriebenen Verfahren.

Ein weiteres Verfahren der eingangs umrissenen Art ist aus der EP-PS 0 142 482 bekannt. Bei diesen Verfahren wird zunächst ebenfalls in Axialrichtung ein Schlauch extrudiert, der mittels Druckluft im Inneren des Formkanals aufgeblasen und in die die Rippen bildenden Vertiefungen der Hohlform hineingepreßt werden soll. Hierbei treten bereits erhebliche Probleme auf, eine einwandfreie Füllung der Rippenhohlräume lediglich durch die Druckluft zu erreichen. Der Düsenkern trägt einen zweiten Extrusionskopf, aus dem ein weiterer Kunststoffschlauch extrudiert wird, der ebenfalls von Druckluft aufgeblasen und von innen gegen die mehr oder weniger glatte Wand des bereits erzeugten Rippenrohres gepreßt wird. Der Kern dieses zweiten Extrusionskopfes trägt wiederum im Abstand einen Kolben, welcher die Innenwand des so erzeugten Rohres glätten soll. Bei diesem Verfahren tritt in erhöhtem Maße das Problem der einwandfreien Ausbildung der Rippen auf.

Aus der DE-AS 23 62 444 ist ein Verfahren bekannt, bei welchem im Inneren der wandernden Hohlform ein leicht konisch nach außen gerichteter rohrförmiger Kunststoffschmelzestrom in den Ringraum zwischen der Düsenstirnwand, dem Kolben und dem Formkanal hineinextrudiert wird. Hierbei erfolgt also eine Extrusion unmittelbar in den zu füllenden Raum. Auch bei diesem Verfahren tritt insbes. dann, wenn es mit einigermaßen vernünftigen Arbeitsgeschwindigkeiten durchgeführt werden soll, die Schwierigkeit einer einwandfreien Rippenausbildung auf. Desweiteren entsteht bei diesem Verfahren ein durch den unterschiedlichen Werkstoffbedarf im rippenlosen und gerippten Bereich des Rohres pulsierender Rückdruck, der ebenfalls nachteilig ist. Schließlich wird bei den bekannten Verfahren die Innenfläche des Rohres vielfach unregelmäßig.

Aus der FI-A 70 822 ist eine Vorrichtung der eingangs genannten Art bekannt, bei welcher die den jeweiligen Formkanal bildenden Formhälften derart ausgebildet sind, daß die Trennebenen des Formkanales zwischen den beiden Formhälften gemäß den Figuren 2 bis 4 dieser Druckschrift jeweils in der Mittel-Längsachse und senkrecht zur Zeichnungsebene verlaufen. Hieraus folgt jedoch, dass gemäß den Figuren 2 und 3 dieser Druckschrift der zuletzt bei der Rippenbildung gefüllte Bereich sich jeweils um 90 Winkelgrad umfangsmäßig gegenüber der Trennebene zwischen den Formhälften versetzt befindet. Auch bei der Ausführungsform gemäß Fig. 4 dieser Druckschrift wird -wie die Wellenlinie erkennen läßt- der Umfangsbereich, in dem die Form-Trennebene verläuft, nicht zuletzt sondern zuerst gefüllt.

Die Erfindung will ein Verfahren der eingangs umrissenen Art schaffen, welches die Nachteile der bekannten Verfahren nicht aufweist, sich also dadurch auszeichnet, daß auch bei vernünftigen Arbeitsgeschwindigkeiten eine einwandfreie Füllung der die Rippen bildenden Hohlräume gewährleistet ist, wobei ferner auch andere Nachteile wie die oben erwähnte Inhomogenität der Rohrstruktur, hoher Innendruck auf einer langen Strecke des Formkanals und Abhängigkeit der korrekten Füllung der Rippenhohlräume von der Zähigkeit der Schmelze weitgehend vermieden wird.

Die Erfindung löst die dargelegte Aufgabe dadurch, daß bei der Rippenbildung jeweils wenigstens ein Umfangsbereich des Formkanals zuletzt gefüllt wird, in dem eine der Trennfugen angeordnet ist.

Auf diese Weise wird nicht jeder Rippenhohlraum schlagartig mit Schmelze gefüllt, wobei die sich in der Rippe befindliche Luft nur schwer entweichen könnte, was dann auch zu Lufteinschlüssen führen würde. Dadurch, daß in bestimmten Umfangsbereichen die Schmelze stärker in den die Rippe bildenden Hohlraum eintreten kann als in den übrigen Bereichen, füllt die Schmelze in diesen Bereichen den die Rippe bildenden Hohlraum zuerst und kann die Luft in Umfangsrichtung vor sich herschiebend den Rippenhohlraum schnell füllen. Hierbei muß natürlich dafür Sorge getragen werden, daß in den Bereichen, in welche die Schmelze zuletzt eintritt, eine ausreichende Abströmmöglichkeit für die Restluft vorhanden ist. Dies kann bspw. dadurch geschehen, daß dort entsprechende Luftaustrittsbohrungen vorhanden sind, oder aber die ganze Form kann aus ausreichend porösem Material bestehen. Auch in letzterem Falle hat sich das erfindungsgemäße Verfahren als in bezug auf die einwandfreie Rippenausbildung weitaus leichter beherrschbar erwiesen als die vorbekannten Verfahren.

Erfindungsgemäß kann die in die trennfugenfernen Bereiche jedes Rippenhohlraumes einströmende Schmelze die Luft vor sich her zu den Trennfugen und durch letztere ausschieben.

Gemäß einer bevorzugten Weiterbildung der Erfindung wird der Kunststoffstrom aus der Düse im wesentlichen radial nach außen gegen die Innenwand des Formkanals ausgepreßt. Das hat den wesentlichen Vorteil, daß von Anfang an eine erhebliche auf Füllung der Rippenhohlräume in der wandernden Hohlform gerichtete Strömungsrichtung vorhanden ist. Ein Abströmen der Schmelze entgegen der Wanderrichtung des Formkanals zwischen Düse und geringster lichter Weite des Formkanals tritt hierbei nicht auf, wenn die Extrusionsgeschwindigkeit, also der Schmelzedurchsatz in der Zeiteinheit und die Wandergeschwindigkeit des Formkanals aufeinander abgestimmt sind und ferner der Spalt zwischen dem Außenumfang und der Umfangsfläche des Mantels der in den Formkanal ragenden Düse klein genug gehalten wird, also bspw. in der Größenordnung von 0,1 oder 0,2 mm.

Die Erfindung umfaßt auch eine Vorrichtung zur Durchführung des Verfahrens mit einem Formgebungswerkzeug aus umlaufenden endlosen Folgen von Formteilen, welche einen die gewünschte Außenform des Rohres aufweisenden wandernden Formkanal bilden, mit einem Extruder und einer Extrusionsdüse, die einen rohrförmigen Extrusionskanal aufweist, der im Inneren des Formkanals mündet, und mit einem im Formkanal stromabwärts der Düsenmündung angeordneten, die Innenoberfläche des Rohres formenden Kolben.

Das Formgebungswerkzeug besteht in der Regel aus zwei endlosen umlaufenden Folgen von Formhälften, die sich längs einer geraden Arbeitsstrecke zu einem wandernden Formkanal ergänzen und in der Regel mit entsprechenden Kühleinrichtungen versehen sind. Ebenso ist der Formgebungskolben mit Kühleinrichtungen versehen, durch welche Kühlmittel in ihm zirkulieren kann. Derartige Ausbildungen sind jedoch allgemein bekannt und daher im Rahmen der vorliegenden Erfindung nicht näher erläutert.

Gemäß einer Ausführung der Erfindung ist die Vorrichtung dadurch gekennzeichnet, daß der Extrusionskanal in dem Umfangsbereich, in dem eine der Trennfugen angeordnet ist, verengt ist. Dadurch tritt in den Bereichen verzögerten Austritts die Schmelze langsamer aus als in den anderen Umfangsbereichen und es wird der oben erwähnte Effekt erzielt, daß in den gewünschten Bereichen die Schmelze erst später austritt als in den Bereichen, in denen sie zuerst die Rippenhohlräume füllen und in diesen die Luft in Umfangsrichtung vor sich herschieben soll.

Gemäß einer bevorzugten Ausführungsform dieser Verwirklichungsform des apparativen Aspekts der Erfindung ist die Verengung in der Mündung des Extrusionskanals vorgesehen. Die Verengung kann natürlich auch kurz vor der Mündung vorgesehen sein; bevorzugt und auch am einfachsten ist es jedoch, wenn sie unmittelbar in der Mündung liegt.

Es versteht sich, daß die Verengung gegenüber den Bereichen normalen Austrittsquerschnitts des Extrusionskanals vorzugsweise stetig mit langsamem Übergang erfolgt.

Im einfachsten Fall kann man bei der später diskutierten vorteilhaften Weiterbildung mit radialer Austrittsrichtung der Schmelze die Verengung dadurch erzielten, daß man die dem Extruder zugewandte Stirnwand des Kolbens in den Bereichen, in denen ein verzögerter Austritt erwünscht ist, um ein entsprechendes Maß erhöht. Ebenso kann man eine solche Erhöhung bei rotationssymmetrischer Ausbildung der genannten Kolbenstirnwand durch entsprechend stärkeres Vorragenlassen der extruderfernen Stirnwand des Düsenmantels bewirken.

Bei Vorrichtungen z.B. nach der DE-PS 24 50 171 oder der EP-PS 0 142 482 kann das verzögerte Füllen der Rippenhohlräume dadurch z.B. erreicht werden, daß die extruderseitige Kolbenstirnwand in den Bereichen, in denen die Füllung der Rippenhohlräume beginnen soll, erhöht ist, indem dort z.B. die Konizität der Stirnwand vergrößert ist.

Eine besonders vorteilhafte Ausbildung der Vorrichtung zur Durchführung des erfindungsgemäßen Verfahren, wobei die Austrittsöffnung des Extrusionskanals in den Umfangsbereich verzögerten Austritts der Schmelze weiter vom Extruder wegliegt als in den übrigen Bereichen, ist dadurch gekennzeichnet, daß in wenigstens einem Umfangsbereich, in dem die Austrittsöffnung des Extrusionskanals am weitesten vom Extruder entfernt ist, wenigstens eine Trennfuge angeordnet ist.

Vorzugsweise ist bei dieser Ausbildung die Austrittsöffnung des Düsenkanals in der Zylinderabwicklung wellenförmig verlaufend ausgebildet, wobei die dem Extruder abgewandten Amplitudenbereiche der Wellung jeweils im Bereich von Trennfugen der Form verlaufen. Dadurch wird ein Ausschieben der Luft durch die in die Rippenhohlräume eindringenden Schmelze durch den Formspalt begünstigt.

Am einfachsten wird die Konstruktion, wenn man hierbei die Austrittsöffnung desDüsenkanals in der Zylinderabwicklung einfach gewellt verlaufen läßt. Das heißt also, in Umfangsrichtung gesehen steigt der Abstand der Austrittsöffnung des Düsenkanals vom Extruder über dem Umfangswinkel bis zu einem Betrag von 180° an, um dann ebenso stetig wieder auf das ursprüngliche Maß zurückzugehen.

Die Ausbildung, bei welcher die Austrittsöffnung des Extrusionskanals in bestimmten Bereichen weiter vom Extruder weg liegt als in den übrigen Bereichen, hat den wesentlichen Vorteil, daß sie einer eventuell entstehenden Druckpulsation in der zuströmenden Schmelze erheblich entgegenwirkt, wenn der Abstand der Austrittsöffnung des Extrusionskanals vom Extruder um mehr als den axialen Abstand zweier Rippen voneinander variiert.

Bevorzugt wird eine Ausbildung, bei welcher die Antrittsöffnung des Düsenkanals in der Zylinderabwicklung zweimal gewellt verläuft. Hierbei ist dann die Ausbildung der Düse und damit auch die Strömung in bezug auf zwei senkrecht aufeinanderstehende Axialebenen symmetrisch.

Wie weiter oben bei der Diskussion des Verfahrens bereits erwähnt, wird es bevorzugt, daß die dem Extruder abgewandten Amplitudenbereiche der Wellung jeweils im Bereich von Trennebenen der Form verlaufen.

In apparativer Hinsicht wird es bevorzugt, -ist aber nicht notwendige Bedingung für die Erfindung- daß die Stirnwand des Mantels der Düse und die dieser zugekehrte Stirnwand des Kolbens einen im wesentlichen radial nach außen mündenden Austrittsbereich des Düsenkanals bilden, da hierdurch die Strömungsrichtung der austretenden Schmelze unmittelbar in die die Rippen des Rohres bildenden Formhohlräume hineingerichtet ist.

Will man auch die Druckpulsationen gering halten, so kann man dies am exaktesten dadurch erreichen, daß der Abstand vom am extrudernächsten Teil des extruderseitigen Randes der Düsenöffnung bis zum extruderfernsten Teil dieses Randes der Düsenöffnung einer Teilung oder einem ganzzahligen Vielfachen einer Teilung der Rippenanordnung des Rohres entspricht. Mit Teilung der Rippenanordnung ist hier der Abstand gemeint, der von einem bestimmten Punkt des Profils der Rippenanordnung in Rohrlängsrichtung sich bis zum Beginn des nächsten gleichen Punktes der Rippenanordnung erstreckt.

Nachfolgend sind zur Erläuterung der Erfindung bevorzugte Ausführungsformen derselben anhand der schematischen Zeichnungen beschrieben.

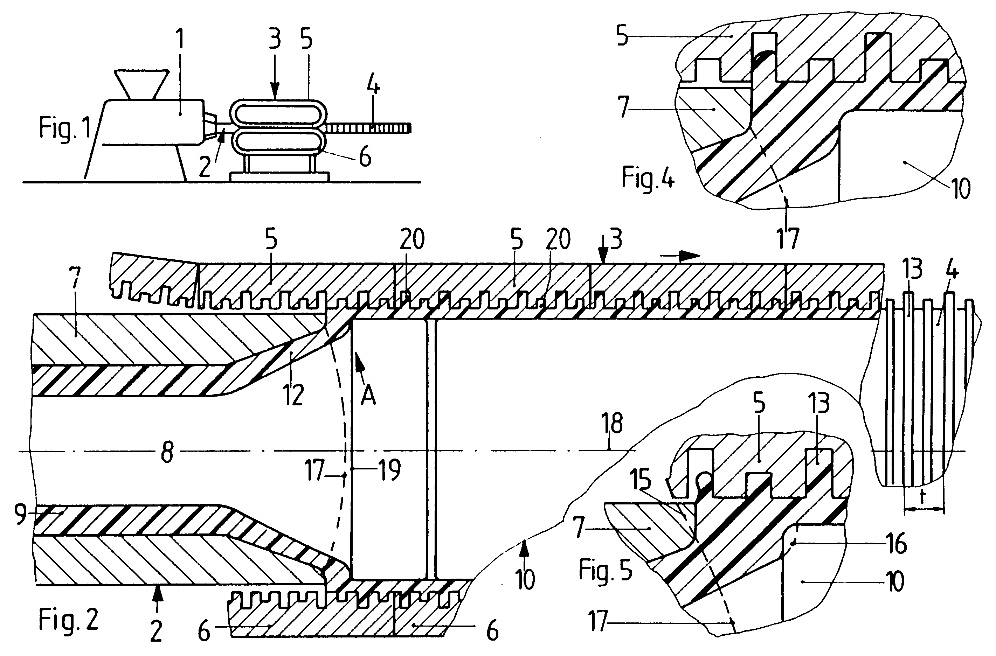

Fig. 1 zeigt die Ansicht einer Vorrichung nach der Erfindung von der Seite im Überblick,

Fig. 2 zeigt einen Axialschnitt durch den Bereich der Vorrichtung, in welchem die Extrusionsdüse in den wandernden Formkanal mündet, mit dem Formgebungskolben,

Fig. 4 zeigt vergrößert den Bereich A aus Fig. 2,

Fig. 5 zeigt im gleichen Maßstab wie Fig. 4 eine abgewandelte Ausführungsform des Bereichs der Extrusionsöffnung

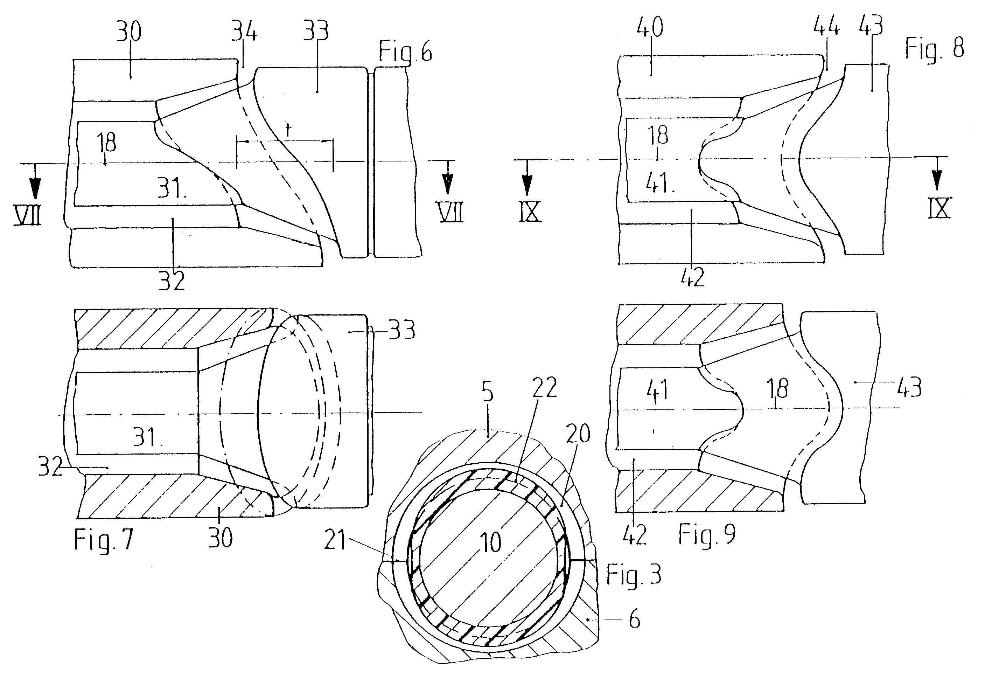

Fig. 6 zeigt eine weitere Ausführungsform der Erfindung, ebenfalls im Axialschnitt, der hier mit dem Schnitt durch die Trennebene der beiden Hälften der wandernden Hohlform zusammenfällt.

Fig. 7 zeigt die Ansicht von oben auf Fig. 6 im Axialschnitt VII - VII.

Fig. 8 zeigt ebenfalls einen in der Trennebene der beiden Formhälften des Formkanals liegenden Axialschnitt einer weiteren Ausführungsform der Erfindung.

Fig. 9 zeigt den Schnitt IX - IX aus Fig. 8.

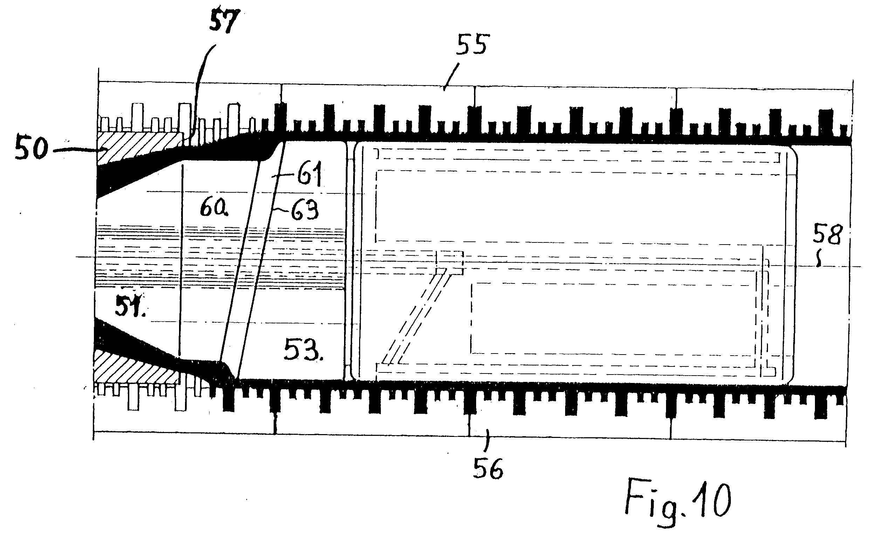

Fig. 10 zeigt eine weitere Ausführungsform in ähnlicher Darstellung wie Fig. 2.

Fig. 3 zeigt in einem Normalschnitt zur Extrusionsrichtung schematisch den erfindungsgemäß angestrebten Effekt eines über den Umfang ungleichmäßig in die Rippenhohlräume der Form eintretenden Schmelzestromes.

In der Übersichtsskizze gemäß Fig. 1 erkennt man einen Extruder 1, dessen Extrusionsdüse 2 in den Formhohlraum eines Formgebungswerkzeuges 3 ragt, aus welchem rechts das fertige erzeugte Rippenrohr 4 austritt. Das Extrusionswerkzeug 3 besteht in üblicher Weise aus zwei im Kreislauf geführten Folgen von Formbackenhälften 5 und 6, die längs einer geraden Arbeitsstrecke (hier in einer Flucht mit der Düse und dem gezeigten Rohr 4) abstandslos nebeneinander herlaufen und dort einen wandernden Formkanal bilden, dessen Innenwandung der gewünschten Außenform des Rippenrohres entsprechen.

Wie aus Fig. 2 ersichtlich, besitzt die Düse 2 einen Düsenmantel 7, der zwischen sich und dem Düsenkern 8 einen rohrförmigen Düsenkanal 9 freiläßt, der sich kurz vor der Mündung der Düse bei A konisch wieder nach außen erweitert. Der Düsenkern 8 trägt an seiner die konische Erweiterung des Formkanals innen begrenzenden konischen Erweiterung den Formgebungskolben 10, der die Innenwandung des zu erzeugenden Rippenrohres formt und im Inneren mit nicht dargestellten Kühleinrichtungen versehen ist, die in der Regel durch den Kern 8 gespeist werden. Dem Kolben 10 können noch weitere Elemente wie z.B. weitere Kolben zum Halten von Stützluft zwischen dem Kolben 10 und einem weiteren Kolben nachgeschaltet sein. In Fig. 5 ist der Schmelzestrom mit 12 bezeichnet, der im Bereich des Kolbens 10 kontinuierlich in das fertige Rohr 4 übergeht.

Der Düsenkanal 9 erweitert sich, wie am besten aus Fig. 2 ersichtlich, vor der Austrittsöffnung in den Formhohlraum zwischen Düsenmantel 7, wandernder Hohlform 3 und Kolben 10 trompetenförmig, um an seinem Ende im wesentlichen radial nach außen gekrümmt zu verlaufen, so daß dort der Schmelzestrom wenigstens angenähert radial austritt.

Die Austrittsöffnung muß nicht genau radial sein wie dies beispielsweise in Fig. 4 gezeigt ist. Auch bei einer streng radialen Richtung, aber nur kurzer Erstreckung des radialen Bereiches über der Ausbildung gemäß Fig. 4 wird die Strömung auch im dortigen Bereich noch beim Austritt eine gewisse Komponente in Wanderrichtung der Hohlform 3 vom Extruder weg besitzen. Diese axiale Geschwindigkeitskomponente des Schmelzestromes kann noch unterstützt werden, indem man dem im Prinzip radialen Austrittsbereich eine gewisse Neigung in Formwanderrichtung gibt, wie dies in Fig. 5 gezeigt ist. Sind die zu erzeugenden Rippen 13 des Kunststoffrohres 4 sehr hoch und schmal, so kann die Füllung dadurch noch verbessert werden, daß man dem radial gerichteten Austrittsbereich des Düsenkanals sogar im Gegensatz zu Fig. 5 eine zum Extruder hin gerichtete Komponente verleiht. In diesem Falle könnten die Wandbereiche dieses Bereiches so verlaufen, wie in Fig. 5 strichpunktiert bei 15 und 16 angedeutet ist. Erst ein derartiger Verlauf des Austrittsbereichs des Schmelzekanals in der Düse wird nämlich tatsächlich einen vertikalen Austritt der Schmelze aus der Düse bewirken.

Wie aus Fig. 2, 4 und 5 ersichtlich, verläuft im hier gezeigten Ausführungsbeispiel die mündungsnahe Stirnwand 17 des Düsenmantels 7 nicht wie bisher üblich rotationssymmetrisch in Bezug auf die Achse 18 der Düse und des Formkanals. Diese Stirnwand steigt vielmehr von ihren beiden in Fig. 2, 4 und 5 oben und unten ligenden Bereichen nach rechts, also zum Kolben hin, stetig geringfügig an, so daß sie in der senkrecht zur Zeichenebene durch die Achse 18 verlaufenden Ebene einen etwas erhöhten Abstand vom Extruder hat. Dadurch ist in diesen Bereichen die Breite des Austrittsspaltes auf etwa 2/3 der Breite der in Fig. 2, 4 und oben und unten liegenden Bereiche reduziert, da die gegenüberliegende Stirnwand 19 des Kolbens 18 rotationssymmetrisch in Bezug auf die Achse 18 verläuft. Das heißt, die extruderseitige Oberfläche des Kolbens 18 ist durch Rotation der in Fig. 2 oder 4 oder 5 ersichtlichen Begrenzungslinie dieser Fläche um die Achse 18 gebildet.

Da durch die Einschnürung der Extrusionsöffnung in den beiden in Fig. 2, 4 oder 5 in maximalem Abstand vor und hinter der Zeichenebene liegenden Bereichen dort die Schmelze langsamer austritt als in den in diesen Figuren oben und unten liegenden Bereichen tritt der in Fig. 2 angedeutete Effekt auf. Der in die Rillen 20 in der Wandung des Formkanals eintretende Kunststoff tritt in Fig. 2, 4 oder 5 oben und unten schneller ein als in die in Fig. 3 rechts und links in der Trennebene 21 der beiden Formhälften liegende Bereiche der Rippenhohlräume 20. Wenn in diese Bereiche die Kunststoffschmelze noch nicht eingedrungen ist, ist in die oberen und unteren Bereiche wie grob schematisch bei 22 in Fig. 3 angedeutet, schon Schmelze eingedrungen, die nun oben und unten als erstes die Rippenhohlräume füllt und die Luft zu den Trennfugen 21 hin verdrängt, so daß eine einwandfreie Füllung gewährleistet ist.

Die in Fig. 6 und 7 gezeigte Ausführungsform verwirklicht das Prinzip der Erfindung auf andere Weise. Man erkennt hier den Düsenmantel 30 und den Düsenkern 31, die zwischen sich den links zylindrischen und rechts sich konisch erweiternden Düsenkanal 32 freilassen. Der Düsenkern 31 trägt rechts den die Innenwandung des Rohres formenden Kolben 33. Auch hier verläuft der Austrittsbereich des Düsenkanals wie bei 34 ersichtlich radial nach außen, wenngleich dies für die Verwirklichung der Erfindung nicht unabdingbar ist.

Wie aus Fig. 6 und 7 ersichtlich, ist die Breite der Düsenaustrittsöffnung hier über dem gesamten Umfang im wesentlichen konstant. Die Düsenaustrittsöffnung ändert jedoch über dem Umfang ihren Abstand von dem links befindichen Extruder und zwar um das Maß t einer Teilung der Rippen 13 des Rohres 4 (Fig. 2). Das heißt, vom in Fig. 6 obersten Punkt der Austrittsöffnung des Extrusionskanales bei 34 steigt der Abstand der Austrittsöffnung des Extrusionskanales vom Extruder über dem Umfang konstant an, bis er den Höchstwert von einer Teilung in Fig. 6 unten erreicht, um dann ebenso konstant wieder mit weiterem Umlaufen des Umfangs bis zum obersten Punkt in Fig. 6 abzusinken. Auf diese Weise tritt die Schmelze im in Fig. 6 obersten Punkt, der bei einer Konstruktion gemäß Fig. 1 mit in einer Vertikalebene umlaufenden Formbacken in der Horizontalebene zwischen den beiden Formbackenfolgen 5 und 6 liegt und bei in waagerechter Ebene umlaufenden Formbacken 5 und 6 oben liegt und der ferner in einer der beiden Trennfugen des Formkanals liegt, aus dem Düsenkanal zuerst aus, um zuletzt am in Fig. 6 untersten Punkt der Austrittsöffnung auszutreten, der hier ebenfalls in der Formtrennebene liegt.

Auf diese Weise wird hier erreicht, daß, wenn man in Fig. 3 bleibt, der Kunststoff zuerst in dem Bereich in die Rille 20 eintritt, in dem der Bezugsstrich des Bezugszeichens 21 endet und zuletzt gegenüber, so daß auch hier ein einwandfreies Verdrängen der Luft erreicht ist.

Zu bemerken ist noch, daß, wie aus Fig. 6 und 7 ersichtlich, um einen möglichst konstanten Verlauf des Extrusionskanals vor dem Austrittsbereich zu erhalten, auch die Wandungen des Extrusionskanals 32 in diesem Bereich durch schräge Wendelflächen begrenzt sind.

In Fig. 7 ist der Anschaulichkeit halber die über der Zeichenebene liegende Außenkante der Stirnwand des Düsenmantels 30 strichpunktiert angedeutet.

Bei der Konstruktion gemäß Fig. 8 und 9 ist ebenfalls ein Düsenmantel 40 vorgesehen, der zusammen mit einem Düsenkern 41 einen Düsenkanal oder Extrusionskanal 42 begrenzt. Der Extrusionskanal verläuft auch hier zunächst zylindrisch, um sich in der Nähe der Extrusionsöffnung 44 konisch nach außen zu erweitern. Auch hier trägt der Düsenkern 41 rechts einen Kolben 44. Die Konstruktion gemäß Fig. 8 und 9 unterscheidet sich von der gemäß 6 und 7 dadurch, daß die ebenfalls radial nach außen gerichtete Extrusionsöffnung ihren Abstand vom links befindlichen Extruder über dem Umfang von den beiden Stellen geringsten Abstandes, die in Fig. 8 in einer Normalebene durch die Achse 18 vor und hinter der Zeichenebene liegen, über dem Umfang in Fig. 8 sowohl nach oben als nach unten hin, um eine Teilungslänge vergrößert, um in Fig. 8 oben und unten den größten Abstand zu erreichen, der in Fig. 9 in einer zur Zeichenebene vertikalen Normalebene durch die Achse 18 vor und hinter der Zeichenebene liegt.

Sowohl bei der Konstruktion nach Fig. 6 und 7, als auch bei der nach Fig. 8 und 9 verläuft der Abstand der Extrusionsöffnung 34 bzw. 44 vom Extruder über dem Umfang im wesentlichen längs einer Sinuskurve.

Bei der Ausbildung gemäß Fig. 8 liegt die Zeichenebene der Fig. 8 in der Trennebene 21 der Formhälften 5 und 6, so daß im größtmöglichen Abstand von diesen Trennebenen die Kunststoffschmelze zuerst in die Rippenhohlräume eintritt, um letztere erst im Bereich der Trennfugen 21 voll zu füllen.

Die Erfindung ist nicht auf die in den bisher beschriebenen Figuren erläuterten Möglichkeiten beschränkt. Die Erfindung kann auch beispielsweise auf solche Konstruktionen angewandt werden, bei welchen der zylindrische oder leicht konische Austrittsbereich des Extrusionskanals einen Schlauch austreten läßt, der sich auf die schräg ansteigende extruderseitige Stirnwand des Kolbens aufschiebt, um dann zwischen Kolben und wandernder Hohlform geformt zu werden. Derartige Konstruktionen sind z.B. aus der DE-PS 24 50 171 oder der DE-PS 27 09 395 bekannt. Bei diesen Konstruktionen läßt sich die Erfindung dadurch verwirklichen, daß die extruderseitige Stirnwand des Kolbens im Umfangsbereich verzögerter Füllung einen größeren Abstand von der Düsenmündung aufweist als der übrige Umfangsbereich. Ein Ausführungsbeispiel für eine solche Ausführung ist in Fig. 10 gezeigt. Man erkennt dort links den Düsenmantel 50 mit dem Düsenkern 51, der in den Kolben 53 übergeht. Das Formgebungswerkzeug ist bei 55 und 56 gezeigt, während die Schmelze 57 schwarz angelegt ist.

Bei dieser Konstruktion besitzt die Extrusionsdüse 50, 51 eine Strinwand 57, die in einer Normalebene zur Achse 58 der Extrusionsdüse verläuft. Wie aus der Zeichnung ersichtlich geht der Düsenkern 51 zunächst in eine zylindrische Verlängerung 60 über, die im Abstand von der Düsenstirnwand 57 den Kolben 53 trägt. Im Gegensatz zum Stande der Technik ist bei dieser Konstruktion die schräg von der zylindrischen Verlängerung 60 auf den Kolbendurchmesser ansteigende düsenseitige Kolbenstirnwand 61 nicht rotationssymmetrisch in Bezug auf die Düsenachse 58 ausgebildet. Während sie in Fig. 10 unten gegenüber den bisher beschriebenen Beispielen immer noch einen relativ großen Abstand von der Düsenstirnwand 57 aufweist, steigt dieser relativ große Abstand in Umfangsrichtung zum gegenüberliegenden Punkt, der in Fig. 10 oben ist, stetig an, so daß in Fig. 10 oben die Schmelze erst später in den Bereich zwischen Kolben und Formgebungswerkzeug einströmen kann, wo sie gezwungen ist, die die Rippen bildenden Umfangsrillen zu füllen. Dementsprechend liegt bei der Konstruktion gemäß Fig. 10 ebenfalls die Teilungsebene der Form vorteilhaft in der Zeichenebene.

Bei der Konstruktion gemäß Fig. 10 können der zylindrische Teil 60 und die Stirnwand 61 auch durch einen relativ schwach ansteigenden Konus ersetzt sein, der sich dann von der Stirnwand 57 bis zur düsenseitigen Kante 63 des Kolbens erstreckt. Anstelle eines kegelförmigen Anstieges ist auch ein Anstieg beispielsweise in Form eines balligen Zwischenteils möglich, bei dem dann also die Vergrößerung vom Kerndurchmesser am Düsenaustritt auf den Kolbendurchmesser zu Beginn stärker ist und am geringsten beim Übergang in den Kolbenumfang. Alternativ ist es auch möglich, den Anstieg des Übergangsteils zwischen Düsenaustritt und Kolben am Anfang gering und später stärker zu halten, wie dies in relativ extremer Ausführung in Fig. 10 gezeigt ist.

**Patentansprüche**

1. Verfahren zur Herstellung eines innen glatten, aussen in Umfangsrichtung verlaufende Rippen (13) aufweisenden Rohres (4) aus extrudierbarem Kunststoff, wobei Kunststoffschmelze im Inneren eines die gewünschte Aussenform des Rohres (4) aufweisenden wandernden Formkanales aus einer feststehenden Düse (7, 8) extrudiert, gegen die Innenwand des Formkanales gedrückt und mittels eines im Formkanal vorgesehenen Kolbens (10, 33, 44) eine glatte Rohrinnenwand geformt wird, und wobei die die Rippen (13) des Rohres (4) bildenden Vertiefungen (20) des Formkanales in wenigstens einem bestimmten Teil des Umfanges verzögert mit der Schmelze gefüllt werden,
   **dadurch gekennzeichnet,**
   dass bei der Rippenbildung jeweils wenigstens ein Umfangsbereich des Formkanales zuletzt gefüllt wird, in dem eine der Trennfugen (21) angeordnet ist.

2. Verfahren nach Anspruch 1,
   **dadurch gekennzeichnet,**
   dass der Kunststoffstrom aus der Düse (2) im wesentlichen radial nach aussen gegen die Innenwand des Formkanales ausgepresst wird.

3. Vorrichtung zum Durchführen des Verfahrens nach Anspruch 1 oder 2, mit einem Formgebungswerkzeug (3) aus umlaufenden endlosen Folgen von Formteilen (5, 6), welche einen die gewünschte Aussenform des Rohres (4) aufweisenden wandernden Formkanal bilden, mit einem Extruder (1) und einer Extrusionsdüse (2), die einen rohrförmigen Extrusionskanal (9, 32, 42) aufweist, der im Inneren des Formkanales mündet, und mit einem im Formkanal stromabwärts der Düsenmündung angeordneten, die Innenoberfläche des Rohres (4) formenden Kolben (10, 33, 43),
   **dadurch gekennzeichnet,**
   dass der Extrusionskanal in dem Umfangsbereich, in dem eine der Trennfugen (21) angeordnet ist, verengt ist.

4. Vorrichtung nach Anspruch 3,
   **dadurch gekennzeichnet,**
   dass die Verengung in der Mündung des Extrusionskanales vorgesehen ist.

5. Vorrichtung mit den Merkmalen des Oberbegriffes der Anspruches 3 zur Durchführung des Verfahrens nach Anspruch 1 oder 2, wobei die Austrittsöffnung (34, 44) des Extrusionskanales (32, 42) in den Umfangsbereichen verzögerten Austritts weiter vom Extruder (1) wegliegt als in den übrigen Bereichen,
   **dadurch gekennzeichnet,**
   dass in wenigstens einem Umfangsbereich, in dem die Austrittsöffnung (34, 44) des Extrusionskanales (32, 42) am weitestens vom Extruder (1) entfernt ist, wenigstens eine Trennfuge (21) angeordnet ist.

6. Vorrichtung nach Anspruch 5,
   **dadurch gekennzeichnet,**
   dass die Austrittsöffnung (34, 44) des Düsenkanales (32, 42) in der Zylinderabwicklung wellenförmig verläuft und die dem Extruder (1) abgewandten Amplitudenbereiche der Wellung jeweils im Bereich von Trennfugen (21) der Form (5, 6) verlaufen.

7. Vorrichtung nach Anspruch 6,
   **dadurch gekennzeichnet,**
   dass die Austrittsöffnung (34) des Düsenkanales (32) in der Zylinderabwicklung einfach gewellt verläuft.

8. Vorrichtung nach Anspruch 6,
   **dadurch gekennzeichnet,**
   dass die Austrittsöffnung (44) des Düsenkanals (42) in der Zylinderabwicklung zweimal gewellt verläuft.

9. Vorrichtung nach einem der Ansprüche 3 bis 8,
   **dadurch gekennzeichnet,**
   dass die Stirnwand des Mantels (7, 30, 40) der Düse (2) und die dieser zugekehrte Stirnwand des Kolbens (10, 33, 43) einen im wesentlichen radial nach aussen mündenden Austrittsbereich (34, 44) des Düsenkanales (9, 32, 42) bilden.

**10.** Vorrichtung nach einem der Ansprüche 5 bis 9,

**dadurch gekennzeichnet,**

dass der Abstand vom extrudernächsten Teil des extruderseitigen Randes der Düsenöffnung (34, 44) bis zum extruderfernsten Teil dieses Randes derselben einer Teilung t oder einem ganzteiligen Vielfachen einer Teilung der Rippen (13) des Rohres (4) entspricht.

**11.** Vorrichtung mit den Merkmalen des Oberbegriffes des Anspruches 3, bei welcher der eine schräg ansteigende extruderseitige Stirnwand aufweisende Kolben in erheblichem Abstand von der Extrusionsdüse angeordnet ist, deren Mündung in Bezug auf die Düsenachse rotationssymmetrisch ist, zur Durchführung des Verfahrens nach Anspruch 1 oder 2,

**dadurch gekennzeichnet,**

dass die extruderseitige Stirnwand des Kolbens in dem bei der jeweiligen Rippenbildung zuletzt gefüllten Umfangsbereich einen grösseren Abstand von der Düsenmündung aufweist als der übrige Umfangsbereich, und im zuletzt gefüllten Umfangsbereich eine Trennfuge angeordnet ist.

**Claims**

**1.** Method of producing from extrudable plastic an internally smooth tube (4) having externally circumferentially extending ribs (13), in which plastic melt is extruded from a stationary die (7, 8) in the interior of a moving mould passage having the desired outer form of the tube (4), is pressed against the inner wall of the mould passage and a smooth tube inner wall is formed by means of a piston (10, 33, 43) provided in the mould passage, and in which the depressions (20) of the mould passage which form the ribs (13) of the tube (4) are filled with the melt after a delay in at least one particular portion of the circumference, characterised in that during rib formation in each case at least one circumferential region of the mould passage, in which one of the separation joints (21) is arranged, is filled last.

**2.** Method according to Claim 1, characterised in that the plastic flow from the die (2) is pressed substantially radially outwards against the inner wall of the mould passage.

**3.** Apparatus for carrying out the method according to Claim 1 or 2, having a shaping tool (3) of circulating endless sequences of mould parts (5, 6), which form a moving mould passage having the desired outer form of the tube (4), having an extruder (1) and an extrusion die (2) which has a tubular extrusion passage (9, 32, 42) which opens into the interior of the mould passage, and having a piston (10, 33, 43) arranged in the mould passage downstream of the die mouth and forming the inner surface of the tube (4), characterised in that the extrusion passage is constricted in the circumferential region in which one of the separation joints (21) is arranged.

**4.** Apparatus according to Claim 3, characterised in that the constriction is provided in the mouth of the extrusion passage.

**5.** Apparatus having the features of the preamble of Claim 3 for carrying out the process according to Claim 1 or 2, the exit opening (34, 44) of the extrusion passage (32, 42) in the circumferential regions of delayed exit lying more remote from the extruder (1) than in the remaining regions, characterised in that at least one separation joint (21) is arranged in at least one circumferential region in which the exit opening (34, 44) of the extrusion passage (32, 42) is most remote from the extruder (1).

**6.** Apparatus according to Claim 5, characterised in that the exit opening (34, 44) of the die passage (32, 42) extends in undulating form in cylindrical development and the amplitude regions of the undulation remote from the extruder (1) in each case extend in the region of separation joints (21) of the mould (5, 6).

**7.** Apparatus according to Claim 6, characterised in that the exit opening (34) of the die passage (32) extends in the form of a single undulation in cylindrical development.

**8.** Apparatus according to Claim 6, characterised in that the exit opening (44) of the die passage (42) extends in the form of two undulations in cylindrical development.

**9.** Apparatus according to one of Claims 3 to 8, characterised in that the end wall of the jacket (7, 30, 40) of the die (2) and the end wall of the piston (10, 33, 43) facing the end wall of the jacket form a substantially radially outward-opening exit region (34, 44) of the die passage (9, 32, 42).

**10.** Apparatus according to one of Claims 5 to 9, characterised in that the distance from the portion closest to the extruder of the extruder-side edge of the die opening (34, 44) up to the portion most remote from the extruder of this edge thereof corresponds to one spacing t or an integral multiple of a spacing of the ribs (13) of the tube (4).

11. Apparatus having the features of the preamble of Claim 3, in which the piston having an obliquely rising extruder-side end wall is arranged at a considerable distance from the extrusion die, the mouth of which is rotationally symmetrical with respect to the die axis, for carrying out the method according to Claim 1 or 2, characterised in that the extruder-side end wall of the piston in the circumferential region filled last during the respective rib formation has a greater distance from the die mouth than the remaining circumferential region, and a separation joint is arranged in the circumferential region filled last.

**Revendications**

1. Procédé de fabrication à partir d'une matière extrudable d'un tube (4) lisse à l'intérieur et présentant des nervures périphériques (13) à l'extérieur, selon lequel on extrude un matériau synthétique en fusion provenant d'une tuyère d'injection (7,8) dans un canal de formage se déplaçant et présentant la forme voulue pour l'extérieur dudit tube, le matériau en fusion étant comprimé contre la paroi interne dudit canal de formage, alors que la paroi interne lisse du tube est obtenue au moyen d'un piston (10, 33, 34), et selon lequel on diffère le remplissage d'au moins une partie déterminée du pourtour comportant les cavités (20) du canal de formage donnant leur forme aux nervures (13) du tube (4), caractérisé en ce qu'au cours de la formation de chaque nervure, au moins le secteur périphérique du canal de formage comprenant l'une des jointures de séparation est rempli en dernier.

2. Procédé selon revendication 1, caractérisé en ce que le flux de matériau synthétique provenant de la tuyère (2) est expulsé essentiellement radialement vers l'extérieur contre la paroi interne du canal de formage.

3. Dispositif pour la mise en oeuvre du procédé selon la revendication 1 ou 2, comprenant un outil de mise en forme (3) comportant une succession d'éléments de formage circulant en bandes sans fin (5, 6), qui configurent un canal de formage se déplaçant et présentant la forme extérieure voulue pour le tube, comprenant également une extrudeuse (1) et une tuyère d'extrusion (2), laquelle présente un canal d'extrusion (9, 32, 42) en forme de tuyau qui débouche dans le canal de formage, ainsi qu'un piston (10,33,43) formant la paroi interne du tube (4) et placée dans le canal de formage en aval du débouché de la tuyère, caractérisé en ce que le canal d'extrusion est rétréci dans le secteur périphérique comprenant l'une des jointures de séparation (21).

4. Dispositif selon la revendication 3, caractérisé en ce qu'il existe un rétrécissement au débouché du canal d'extrusion.

5. Dispositif doté des caractéristiques selon le concept général défini dans la revendication 3 pour la mise en oeuvre du procédé selon la revendication 1 ou 2, dans lequel l'ouverture de sortie (34, 44) du canal d'extrusion (32, 42) est placé, dans les secteurs périphériques à sortie retardée, plus loin de l'extrudeuse (1) que dans les autres secteurs, caractérisé en ce que, dans au moins un secteur périphérique dans lequel l'ouverture de sortie (34, 44) du canal d'extrusion (32, 42) est située la plus loin de l'extrudeuse, on trouve au moins une jointure de séparation.

6. Dispositif selon la revendication 5, caractérisé en ce que l'ouverture de sortie (34,44) du canal de la tuyère (32, 42) se développe en forme d'onde dans le cylindre, dont la zone d'amplitude se situant la plus loin de l'extrudeuse (1) correspond à chaque fois à la zone des jointures des formes (5, 6).

7. Dispositif selon la revendication 6, caractérisé en ce que l'ouverture de sortie (34) du canal de la tuyère (33) consiste en une simple ondulation dans le cylindre.

8. Dispositif selon revendication 6, caractérisé en ce que l'ouverture de sortie (44) du canal de la tuyère (42) consiste en une double ondulation dans le cylindre.

9. Dispositif selon l'une des revendications 3 à 8, caractérisé en ce que le front de l'enveloppe (7, 30, 40) de la tuyère (2) et le front du piston orienté vers cette dernière (10, 33, 43) forment une zone de sortie du canal de la tuyère (9, 32, 42) débouchant essentiellement radialement vers l'extérieur.

10. Dispositif selon l'une des revendications 5 à 9, caractérisé en ce que l'écart entre la partie de la bande d'extrusion la plus proche de l'ouverture de la tuyère et celle qui en est la plus éloignée correspond à une période ou à un multiple entier de périodes des nervures (13) du tube (4).

11. Dispositif comportant les caractéristiques du concept général développé en revendication 3, dans lequel le piston présentant une face d'extrusion frontale oblique montante est situé à distance importante de la tuyère d'extrusion, dont le débouché présente une symétrie de rotation par rapport à son axe, dispositif pour la mise en oeuvre du procédé selon la revendication 1 ou 2, caractérisé en ce que la face d'extrusion frontale du piston est dans le secteur circonférentiel à distance plus grande du débouché de la tuyère que les autres secteurs du pourtour, et en ce que c'est dans ce secteur rempli en dernier qu'est localisée une jointure de séparation.

Fig. 8

Fig. 9

Fig. 3

Fig.6

Fig. 7

Fig.10

EP 0 315 012 B1